Europäisches Patentamt

European Patent Office

Office européen des brevets

(11) Publication number: 0 565 004 A2

# EUROPEAN PATENT APPLICATION

(21) Application number: 93105531.3

(22) Date of filing: 02.04.93

(51) Int. Cl.5: C08K 3/26, C08L 67/02

(30) Priority: 06.04.92 JP 84117/92

(43) Date of publication of application:
13.10.93 Bulletin 93/41

(84) Designated Contracting States:
DE FR GB IT LU NL

(71) Applicant: DIAFOIL HOECHST CO., LTD
28-10, Hongo 1-chome
Bunkyo-ku Tokyo(JP)

(72) Inventor: Kotani, Tomoyuki
Popuragaoka Koupu 19-301,
2-13-2, Naruse
Machida-shi, Tokyo(JP)
Inventor: Endo, Kazuo
3-3 Tsutsujigaoka,
Midori-ku
Yokohama-shi, Kanagawa-ken(JP)

(74) Representative: TER MEER - MÜLLER -
STEINMEISTER & PARTNER
Mauerkircherstrasse 45
D-81679 München (DE)

(54) Biaxially oriented polyester film.

(57) A biaxially oriented polyester film containing 0.005 to 2.0% by weight of vaterite-type calcium carbonate satisfying all of the following formulae (1)-(4):

$$d_{25}/d_{75} \leq 2.00 \quad (1)$$

$$0.07 \leq d_{50} \leq 1.50 \quad (2)$$

$$1.6 \leq S < 30.0 \quad (3)$$

$$2.4 \leq d_{50} \times S \leq 7.0 \quad (4)$$

wherein $d_{25}$, $d_{75}$ and $d_{50}$ represent the diameters ($\mu$m) of the particles when the cumulative volumes are 25%, 75% and 50% of the total volume of the particles, respectively, and S represents specific surface area ($m^2/g$) measured by the BET method.

The present invention relates to a biaxially oriented polyester film having a uniform surface, good running property and excellent abrasion resistance.

Biaxially oriented polyester films are widely used as industrial material. Recently, there has been seen an increasing preference for high quality in uses of the polyester films, and a higher uniformity of film surface has been demanded. On the other hand, polyester film has the defect that it is not necessarily satisfactory in abrasion property, specifically it is subjected to chipping of the superficial portion or fall-off of the particles as a result of abrasion of the film, and improvements on these defects have been acutely desired. Solution of these problems to a well satisfactory extent is required especially in use of the polyester film as base film for magnetic recording media for which quality requirement is strict.

As means for improving the running property and abrasion resistance of the polyester film, there has been known a method in which the inactive fine particles are allowed to exist in the film so that the film surface is roughened moderately. This method could indeed make an improvement on the said defects to a certain extent but a well satisfactory result has not been obtained.

For example, in case of using as fine particles the so-called deposited particles, i.e. the particles deposited from the catalyst residue, etc., in the course of preparation of polyester, since these particles tend to be broken on stretching of the film, the obtained film shows to be poor in the running property and abrasion resistance. Also, it is difficult to recycle of the used deposited particles.

In case of adding the particles of an inert inorganic compound to polyester, such as silicon oxide, barium sulfate, titanium dioxide, calcium phosphate or the like, these particles are not be broken or deformed on stretching of the film and they are capable of forming relatively sharp protuberances in the film surface, thereby giving a considerable improvement of the running property of the film. These particles, however, are usually broad in particle-size distribution and prone to fall-off from the film surface. Therefore, when these particles are added, for instance, to base film for magnetic recording media, they often causes frequently deterioration of electromagnetic conversion property (signal recording property)or dropout.

In order to overcome these defects, it has been proposed to use inorganic or organic particles having a sharp particle-size distribution. For example, Japanese Patent Application Laid-Open (Kokai) No. 62-207356 describes a example using monodispersible particles of silicon oxide and Japanese Patent Application Laid-Open (Kokai) No. 59-217755 describes a example using crosslinked organic particles according to emulsion polymerization. However, in case of using the silicon oxide particles, since they have high hardness, they tend to give scratches or flaws to the elements which the film contacts during its running. Also, improvement of abrasion resistance is unsatisfactory. On the other hand, the crosslinked organic particles are not only defective in heat resistance but also have the problem that they tend to be deformed on stretching of the film.

It has been also proposed to use calcium carbonate particles as inorganic particles (Japanese Patent Publication (Kokoku) No. 1-16856 corresponding to U.S. Patent No. 4,727,108).

As the calcium carbonate particles, particles obtained by crushing and classifying natural calcium carbonate may be used. Also, synthesis particles, such as disclosed in Japanese Patent Application Laid-Open (Kokai) No. 59-69425, obtained by injecting a carbon dioxide-containing gas into an aqueous calcium hydroxide solution to cause a reaction for producing the precipitated calcium carbonate particles. According to this case, the obtained calcite-type calcium carbonate particles are relatively uniform in size. It is known to blend such particles in a polyester film as disclosed in Japanese Patent Publication (Kokoku) No. 1-16856, but since these particles are still not so uniformed in size that they all fall within a desired scope of particle-size distribution, it is impossible to obtain a film having excellent and high-level characteristics by using the said particles.

Also, there have been proposed a polyester film for magnetic recording media, having excellent running property and abrasion resistance as follow.

A polyester film for magnetic recording media, containing 0.005 to 2.0% by weight of vaterite-type calcium carbonate particles which are 0.07-1.5 $\mu$m in average size and whose particle size distribution factor defined by the formula shown below is 1.60 or less, and further having the sum of the longitudinal Young's modulus and the transverse Young's modulus of said film of 900 kg/mm$^2$ or greater and the difference in Young's modulus between the longitudinal and transverse directions of the film of 100 kg/mm2 or greater:

$$\text{Particle size distribution factor} = \frac{d_{25}}{d_{75}}$$

(wherein $d_{25}$ and $d_{75}$ represent the diameters ($\mu$m) of the particles when the cumulative volumes are 25% and 75% of the total volume of the particles, respectively) (Japanese Patent Application Laid-Open (Kokai) No. 4-40624 which is European Patent No. 460640A). A thermoplastic polyester composition for obtaining a polyester film having excellent running property and abrasion resistance, said composition comprising a blend of 100 parts by weight of a thermoplastic polyester (A) composed of as a main carboxylic acid component an aromatic dicarboxylic acid and as a main glycol component an aliphatic glycol, and 0.01-10 parts by weight of vaterite-type calcium carbonate particles (B) of having a specific surface area of 30 m$^2$/g or greater as determined by the BET method, an average particle diameter of 0.01 to 5.0 $\mu$m and a shape factor (f) of 0.30 to 0.52 which is defined by the following formula:

$$f = V/D^3 \qquad (I)$$

(wherein V is a particle volume ($\mu$m$^3$) and D is a maximum diameter ($\mu$m) in the projected area of the particle) (Japanese Patent Application Laid-Open (Kokai) No. 4-55464).

The polyester film disclosed in Japanese Patent Application Laid-Open (Kokai) No. 4-40624 is a film containing vaterite-type calcium carbonate having an average particle size of 0.07 to 1.5 $\mu$m and a particle-size distribution ($d_{25}/d_{75}$) of 1.60 or less. This film is relatively good in running property and abrasion resistance. This film, however, is not few in number of coarse protuberances in its surface and does not have a minute-uniform surface structure. Also, its running property and abrasion resistance is not high.

In Japanese Patent Application Laid-Open (Kokai) No. 4-55464, as noted from the description in its specification: "For improving affinity of the particles for the polyester by making use of surface activity of the vaterite-type calcium carbonate particles, it is necessary to make the particles porous and to enlarge the specific surface area ···.", the vaterite-type calcium carbonate particles having an average diameter of 0.01 to 5.0 $\mu$m and a BET specific surface area of 30 m$^2$/g or greater, preferably 50 m$^2$/g or greater (the particles having a specific surface area of 108 m$^2$/g or greater are used in the Examples thereof) are added to the polyester for obtaining a polyester film having excellent running property and abrasion resistance. However, the film obtained from such thermoplastic polyester composition according to the above Japanese KOKAI is not few in number of coarse protuberances in the surface and does not have a minute-uniform surface structure, and its running property and abrasion resistance are not necessarily satisfactory.

Thus, there has been increasing request in the industries for the development of a biaxially oriented polyester film which is few in number of coarse protuberances in its surface, for example the number of the coarse protuberances of not less than 0.81 $\mu$m in height being not more than 30 per 100 cm$^2$ of film surface, and has a minute-uniform surface structure as well as excellent running property and abrasion resistance.

As a result of strenuous studies thereon, it has been found that a biaxially oriented polyester film obtained by blending in a polyester 0.005 to 2.0 wt% of vaterite-type calcium carbonate having a particle-size distribution ($d_{25}/d_{75}$) of not more than 2.00, an average particle diameter ($d_{50}$) of 0.07 to 1.50 $\mu$m a BET specific surface area (S) of not less than 1.6 m$^2$/g and less than 30 m$^2$/g, and the product of average particle diameter and specific surface area ($d_{50} \times S$) of 2.4-7.0; melt-extruding the resultant mixture; cooling and solidifying the extruded product to obtain an amorphous sheet; stretching this amorphous sheet; and heat-setting the stretched sheet, is few in number of coarse protuberances in the surface, possesses a minute-uniform surface structure and also has excellent running property and abrasion resistance. The present invention has been achieved on the basis of this finding.

An object of the present invention is to provide a biaxially oriented polyester film in which the number of the coarse protuberances of not less than 0.81 $\mu$m in height is not more than 30 per 100 cm$^2$ of film surface, and which has a minute-uniform surface structure and excellent running property and abrasion resistance.

Another object of the present invention is to provide a biaxially oriented polyester film as base film for magnetic tapes having an excellent electromagnetic conversion property (signal recording property) and the maximum dropout count of a magnetic tape per minute of less than 13, when the magnetic tape is produced by coating a magnetic layer on said base polyester film.

To achieve such object, in an aspect of the present invention, there is provided a biaxially oriented film containing 0.005 to 2.0 wt% of vaterite type calcium carbonate which satisfies all of the following formulae (1)-(4):

$$d_{25}/d_{75} \leq 2.00 \qquad (1)$$

$$0.07 \leq d_{50} \leq 1.50 \qquad (2)$$

$$1.6 \leq S < 30.0 \qquad (3)$$

$$2.4 \leq d_{50} \times S \leq 7.0 \qquad (4)$$

wherein $d_{25}$, $d_{75}$ and $d_{50}$ represent diameters (μm) of the particles when the cumulative volumes are 25%, 75% and 50% of the total volume of the particles, respectively, and S represents a specific surface area ($m^2$/g) measured by the BET method.

The "polyester" referred to in the present invention means any of polyesters which can be obtained by using an aromatic dicarboxylic acid or an ester thereof and a glycol as main starting materials and in which not less than 80% of the repeating structural units are occupied by ethylene terephthalate unit or ethylene-2,6-naphthalate unit. The aromatic dicarboxylic acids usable as a component of the polyester according to the present invention include terephthalic acid, 2,6-naphthalenedicarboxylic acid, isophthalic acid, phthalic acid, adipic acid, sebacic acid, oxycarboxylic acids (such as p-oxyethoxybenzoic acid, etc.,) and the like. The glycols usable as another component of the said polyester include ethylene glycol, diethylene glycol, propylene glycol, butanediol, 1,4-cyclohexanedimethanol, neopentyl glycol and the like. These glycols may be used either singly or in combination.

An important feature of the present invention is that monodisperse vaterite-type calcium carbonate having specific particle characteristics is used as the particles to be blended in the polyester film.

The vaterite-type calcium carbonate particles with a very sharp particle-size distribution and having the sizes and specific surface areas in the ranges satisfying the requirements of the present invention can be produced according to a calcium carbonate synthesis method in which a calcium compound as starting material is reacted with carbon dioxide in an alcohol/water mixed medium system by a carbonatation reaction, selecting properly the production conditions such as hydrogen ion concentration, reaction rate, reaction temperature, conductivity, etc.

Examples of the calcium compounds usable as starting material in the above process are calcium oxide, calcium hydroxide, metallic calcium, calcium hydride, calcium chloride, calcium iodide and calcium nitrate. Of these compounds, calcium oxide is especially preferred. The alcohols usable for the carbonatation reaction in the above process are mono-, di- and trihydric alcohols having not more than 4 carbon atoms. Preferred examples of such alcohols are methyl alcohol, ethyl alcohol, propyl alcohol, butyl alcohol, glycerin and the like. Among them, methyl alcohol is especially preferred. These alcohols may be used either singly or in combination. The carbonatation reaction is carried out by using carbon dioxide or a carbonate. Carbon dioxide used in the reaction may be either a gas or a solid like dry ice. It is also possible to use a gas generated when limestone is calcined, wherein such a gas contain carbon dioxide in a concentration of around 30 vol%.

A preferred method for producing vaterite-type calcium carbonate usable in present invention is as follows. To a methanol suspension of quick lime and/or slaked lime with a concentration of 0.5 to 12 wt% , preferably 1 to 8 wt% (calculated as quick lime), water of 5 to 20 times, preferably 5 to 15 times (calculated as quick lime) is added, thereby mixing water, methanol and quick lime and/or slaked lime. Then gaseous carbon dioxide is passed through the resultant mixture and a carbonatation reaction is carried out under control such that in the conductivity variation curve of the carbonatation reaction system, the temperature in the system become not less than 30 °C, preferably not less than 40 °C, before the conductivity in the carbonatation reaction system reaches the maximal point, and that the time from beginning of the carbonatation reaction to the point of 100 μS/cm of the conductivity in the reaction system is less than 600 minutes, preferably less than 120 minutes, more preferably less than 100 minutes.

The vaterite-type calcium carbonate particles are preferably subjected to a surface treatment for reducing solubility in the reaction system while improving dispersibility of the particles. As the surface treating agent which can concurrently serve as dispersant, there can be used, for instance, those disclosed in Japanese Patent Application Laid-Open (Kokai) No. 59-69426, 1-256558 and 4-31319, typically polycarboxylic acid, ammonium salt thereof or sodium salt. Concretely, acrylic acid, methacrylic acid, maleic acid, PEG monoacrylate, butyl acrylate, cyclohexyl acrylate, ammonium salt thereof and sodium salt thereof may be exemplified. Such a surface treating agent, to be most effective, is usually added in the course of the preparation process of the particles.

The particle-size distribution ($d_{25}$/$d_{75}$) of the vaterite-type calcium carbonate particles used in the present invention is not more than 2.00, preferably not more than 1.80, more preferably 1.00 to 1.50. When the particle-size distribution factor exceeds 2.00, the surface roughness of the finally obtained film becomes non-uniform, which impairs the electromagnetic conversion property and/or reduces the withstand voltage of the film.

The average diameter ($d_{50}$) of the calcium carbonate particles used in the present invention is 0.07 to 1.50 $\mu$m, preferably 0.10 to 1.20 $\mu$m, more preferably 0.12 to 1.0 $\mu$m. When the average particle diameter is less than 0.07 $\mu$m, it is difficult to improve the running property and abrasion resistance of the film. On the other hand, when the average particle diameter exceeds 1.50 $\mu$m, the surface roughness of the film becomes too high, which may impair the electromagnetic conversion property of the film.

One of the features of the present invention is use of the vaterite-type calcium carbonate particles whose a BET specific surface area is in a specified range. In the course of studies for lessening the coarse protuberances in the film surface, which is an object of the present invention, the present inventors found surprisingly that the porosity of the vaterite-type calcium carbonate particles used is very important in terms of film surface properties.

The BET specific surface area (S) of the vaterite-type calcium carbonate particles used in the present invention is not less than 1.6 $m^2$/g and less than 30 $m^2$/g, preferably 2.0 to 25.0 $m^2$/g. This means that the porous particles, that is, the particles having a BET specific surface area exceeding 30 $m^2$/g, are unfavorable for use in the present invention.

The vaterite-type calcium carbonate particles generally used in the polyester films, as described in, for instance, Japanese Patent Application Laid-Open (Kokai) Nos. 61-77622, 64-72916 and 4-55464, are the porous particles having a large specific surface area. It is to be noted that in the present invention, if a film is made by blending in a polyester the vaterite-type calcium carbonate particles having a specific surface area (S) exceeding 30.0 $m^2$/g, there are formed too many coarse protuberances, and when a magnetic tape is made by using such a film, the dropout count increases and there can not be obtained a high-quality magnetic tape. On the other hand, if the specific surface area (S) is less than 1.6 $m^2$/g, such particles are too large in size although they are non-porous, so that when a film is made by using such particles, the surface roughness of the film becomes too high, resulting in impairment of electromagnetic conversion property of the magnetic recording media made by using such a film.

There may be the cases where a film having the desired surface properties can not be obtained even though the BET specific surface area (S) of the particles used falls within the range specified in the present invention. This is due to the fact that even with the porous particles, the BET specific surface area of the particle enlarges as the particle size is reduced, and conversely, the BET specific surface area of the particle lessens as the particle size enlarges.

In the present invention, the porosity of the vaterite type calcium carbonate particles is represented by the following expression:

Ratio of BET specific surface area = (measured value of BET specific surface area)/(calculated value of BET specific surface are) = 0.417 x S x $d_{50}$

In the above expression, the ratio of BET specific surface area of the perfectly non-porous particle is 1.0, and the closer to 1.0 is the ratio of BET specific surface area, the greater is the extent of non-porosity of the particle. 'Calculated value of BET specific surface area' is the value obtained when the particle size is defined as $d_{50}$ $\mu$m, the particle-size distribution is 1.0 and the particles are regarded as perfectly non-porous true spheres. Thus, the smaller the product of $d_{50}$ and S, the greater the degree of non-porosity of the particles.

As a result of studies for lessening the formation of coarse protuberances in the film surface, it was found that the product of average particle diameter ($d_{50}$) and BET specific surface area (S) of the vaterite-type calcium carbonate particles is in the range of 2.4 to 7.0, preferably 3.0 to 7.0, more preferably 3.0 to 6.0. The close relationship existing between the product of BET specific surface area and average diameter of the vaterite-type calcium carbonate particles, that is, the porosity of the particles, and the surface properties of the film is unapparent, but the present inventors guess as follow. When the ordinary porous vaterite-type calcium carbonate particles are contained in a polyester, there tends to take place agglomeration of the particles, and as a result, the coarse protuberances are formed in the film surface. Specifically, in the case of a polyester film containing the vaterite-type calcium carbonate particles with $d_{50}$ x S exceeding 7.0, there are formed an excessively large number of coarse protuberances in the film surface, and when a magnetic tape is made by using such a film, the dropout count increases and there can not be obtained a high-quality magnetic tape.

In the present invention, the amount of the calcium carbonate particles to be blended in the film is 0.005 to 2.0 wt%, preferably 0.01 to 1.5 wt%, more preferably 0.03 to 0.8 wt% based on the polyester film. When the amount of the particles blended is less than 0.005 wt%, almost no improvement is made on running property and abrasion resistance of the film. On the other hand, when the amount of the particles exceeds 2.0 wt%, the surface roughness of the film becomes too high, impairing the electromagnetic conversion property of the magnetic tape.

In the present invention, the shape of the calcium carbonate particles used is not limited, but the spherical or ellipsoidal particles are preferred in view of the improving effect on uniformity of film surface, abrasion resistance and running property of the film. More specifically, the sphericity ratio (major diameter / minor diameter) of the particle is preferably 1.0 to 2.0, more preferably 1.2 to 1.8, most preferably 1.3 to 1.8.

As described above, in the present invention by using the vaterite-type calcium carbonate particles having a specified particle-size distribution, average particle diameter and BET specific surface area, the unexpected effects is obtained when the following conditions are met.

The first combination is set forth below.

The particles are blended in a film containing not less than 80 mol% of ethylene terephthalate units and having a refractive index in the thickness direction of not less than 1.492. When a film having a refractive index of not less than 1.492 is used, the effect of improving the slip property and abrasion resistance is sufficiently attained, and further an adhesiveness to the magnetic layer is improved. The preferred range of refractive index in the thickness direction of the film is 1.494 to 1.505. A film having such properties can be obtained by controlling the longitudinal stretching temperature at about 85 to 115°C which is 5 to 30°C higher than the ordinary stretching temperature, in the case of successive biaxial stretching.

It is also notable that when the difference ($\Delta n = n_{TD} - n_{MD}$) between the refractive index in the transverse direction ($n_{TD}$) and the refractive index in the machine direction ($n_{MD}$) of the polyester film containing not less than 80 mol% of ethylene terephthalate units is not more than 0.010, the film has especially good cutting property and is suited for use as base film for magnetic tapes. The 'cutting property' referred to herein means the aptness to cutting of the film observed when a magnetic tape is slit by a shear cutter or other means. The bad cutting property may cause libwise upturn of the cut edge, or generation of swarf or dust from the cut edge. When such a phenomenon occurs, white dust may attach on the tape, causing deterioration of electromagnetic conversion property or inducing drop-out. The difference ($\Delta n$) is preferably not less than 0.020, more preferably not less than 0.025, even more preferably not less than 0.035. The difference ($\Delta n$) is too large, troubles such as heat shrinkage, etc., may be brought about, so that it is preferable to set the upper threshold value of $\Delta n$ at 0.060.

The intrinsic viscosity of the polyester film containing not less than 80 mol% of ethylene terephthalate units is preferably 0.52 to 0.62, more preferably 0.54 to 0.59. Generally, the lower the intrinsic viscosity, the better the cutting property of the film. However, when the intrinsic viscosity is less than 0.52, there tends to take place break of the film in the course of its forming process. On the other hand, when the intrinsic viscosity exceeds 0.62, the effect of improving the cutting property of the film may be unsatisfactory.

The sum of the longitudinal Young's modulus and the transverse Young's modulus of the polyester film containing not less than 80 mol% of ethylene terephthalate units is preferably not less than 900 kg/mm², more preferably not less than 1,000 kg/mm², even more preferably not less than 1,100 kg/mm². Usually, when a film is stretched strongly for strengthening it, there is a tendency for the particles to fall off from the surface layer of the film, but in case of using the particles according to the present invention, there is a decreasing tendency of such a particle fall-off phenomenon. Such a high-strength film can be obtained by the known film forming methods, for example, a method in which a substantially non-oriented unstretched sheet is stretched 3.0 to 6.0 times in the machine direction at a temperature of 80 to 120°C, then further stretched 3.0 to 6.0 times in the transverse direction at a similar temperature, and then heat-set at a temperature of 170 to 240°C. It is also possible to employ a method in which an unstretched sheet is biaxially stretched successively or simultaneously, then further stretched 1.05 to 2.5 times in the machine direction at a temperature of 110 to 180°C, and then heat set. In these methods, there may be properly incorporated such techniques as heat-setting before longitudinal re-stretching, relaxing in machine direction after longitudinal re-stretching and longitudinal micro-stretching before or after longitudinal re-stretching. It is also possible to perform similar re-stretching in the transverse direction.

The second combination is set forth below.

The said particles are blended in a film containing not less than 80 mol% of polyethylene-2,6-naphthalate units. Among the polyester films, the one containing not less than 80 mol% of polyethylene-2,6-naphthalate units is drawing attention for its excellent mechanical strength and heat resistance. Since this film is often used under harsh conditions in terms to running speed and tension, further improvements of its properties, especially abrasion resistance, are desired. It is found that a remarkable improvement of abrasion resistance is provided when the sum of the longitudinal Young's modulus and the transverse Young's modulus of the film containing the particles of the present invention is not less than 1,300 kg/mm², preferably not less than 1,400 kg/mm², more preferably not less than 1,500 kg/mm². In the case of using polyethylene-2,6- naphthalate, high-strength film by employing the same techniques as the case of polyethylene terephthalate except that the stretching temperature is raised. That is, in this case, a substantially non-oriented unstretched sheet is stretched 3.0 to 6.0 times in the machine direction, then further stretched 3.0 to 6.0 times in the transverse direction, both at a temperature of 90 to 180°C, and then heat-set at a temperature of 180 to 260°C. It is also possible to employ a method in which an unstretched sheet is biaxially stretched successively or simultaneously, then re-stretched 1.05 to 4.0 times in the machine direction at a temperature of 140 to 200°C and then heat-set. In this case, too, it is possible to properly incorporate the additional techniques such as heat-setting before longitudinal re-stretching, relaxing in the machine direction after longitudinal re-stretching and longitudinal micro-stretching before or after longitudinal re-stretching. Similar re-stretching may be conducted in the transverse direction.

In the present invention, it is possible to add other kind(s) of particles within scopes not being out of the essentials of the present invention, for the purpose of improving the running property, abrasion resistance, scuff resistance (scratch durable) and other properties of the film.

One example of such particles is deposited particles. The term "deposited particles" used herein refers to the particles which are deposited in the reaction system when a polymerization is carried out using an alkaline metal or alkaline earth metal compound as ester exchange catalyst by a conventional method. The particles may be deposited by adding terephthalic acid in the course of ester exchange reaction or polycondensation reaction. In this case, at least one of phosphorus compounds such as phosphoric acid, trimethyl phosphate, triethyl phosphate, tributyl phosphate, acid ethyl phosphate, phosphorous acid, trimethyl phosphite, triethyl phosphite, tributyl phosphite, etc., may be allowed to exist in the system. It is possible to let the particles of an inactive material deposit by these methods in case an esterification step is involved, too. For example, an alkaline metal or alkaline earth metal compound is allowed to exist before or after completion of the esterification reaction, and the polycondensation reaction is carried out in the presence of or absence of a phosphorus compound. In either case, at least one of elements as calcium, lithium, antimony, phosphorus and the like is contained in the 'deposited particles' used in the present invention.

It is also possible to use the additive particles as the particles blended. The 'additive particles' referred to herein mean the particles additive externally to the polyester. Examples of such added particles are the particles of kaolin, talc, carbon black, molybdenum sulfide, gypsum, aluminum oxide, barium sulfate, lithium fluoride, calcium fluoride, zeolite, calcium phosphate, silicon dioxide, titanium dioxide and the like. There can be also used fine powders of heat-resistant polymers. A typical example of such polymers is a copolymer of a monovinyl compound having only one aliphatic unsaturated bond in the molecule and a compound having two or more aliphatic unsaturated bonds in the molecule, which serves as a crosslinking agent, as for instance disclosed in Japanese Patent publication (Kokoku) No. 59-5216. Further, fine powders of thermosetting epoxy resins, thermosetting phenol resins, thermosetting urea resins, benzoguanamine resins and fluorine resins such as polytetrafluoroethylene are also usable.

As for the amount of the additive particles used in the present invention, in case the average particle size of the additive particles is greater than that of the vaterite-type calcium carbonate particles of the present invention, it is recommended to add the said particles in an amount equal to the vaterite-type calcium carbonate particles, preferably 0.005 to 0.5 times, more preferably 0.01 to 0.3 times the vaterite-type calcium carbonate particles by weight. In case the average particle size of the additive particles is smaller than that of the vaterite-type calcium carbonate particles of present invention, it is advised to add the said particles in an amount equal to or greater than the vaterite-type calcium carbonate particles, preferably 1 to 20 times the vaterite-type calcium carbonate particles by weight.

Examples of the additive particles that can be used in combination with the vaterite-type calcium carbonate particles according to the present invention include natural calcium carbonate particles, synthesized calcite-type calcium carbonate particles, and spherical, ellipsoidal, cylindrical or elliptico-cylindrical vaterite-type calcium carbonate particles.

In the present invention, two or more kinds of vaterite-type calcium carbonate particles of the present invention differing in average particle size can be used. It is especially preferable to use the small-sized vaterite-type calcium carbonate particles (primary particles) and the large-sized ones (secondary particles) in combination. The "primary particles" are the particles having an average size (diameter) of 0.07 to 0.8 $\mu$m, preferably 0.10 to 0.50 $\mu$m, more preferably 0.15 to 0.45 $\mu$m, and such primary particles are blended in an amount of 0.2 to 1.0 wt%, preferably 0.25 to 1.0 wt%. The "secondary particles" are the particles having an average particle size which is 1.5 to 5.0 times, preferably 1.8 to 4.5 times that of the primary particles and is not greater than 1.5 $\mu$m, and such secondary particles are blended in an amount of 0.005 to 0.25 wt%, preferably 0.01 to 0.20 wt%.

As for the shape of the additive particles used in the present invention, it is notable that when using the ellipsoidal particles having a sphericity ratio of 1.2 to 2.0, preferably 1.3 to 1.8 as the secondary particles and those having a sphericity ratio of 1.0 to 1.8 as the primary particles, the winding property, running property and abrasion resistance are remarkably improved.

It is possible to afford scuff resistance (scratch durable) to the film by blending the aluminum oxide particles in addition to the above-mentioned particles. Such aluminum oxide particles are preferably those having an average particle diameter of not more than 0.5 $\mu$m, preferably 0.01 to 0.20 $\mu$m. It is more preferable to use the delta- or gamma-type aluminum oxide particles having an average particle diameter of not more than 0.1 $\mu$m, preferably 0.01 to 0.10 $\mu$m. The delta-type aluminum oxide particles having an average particle diameter of not more than 0.1 $\mu$m, preferably 0.01 to 0.10 $\mu$m, is especially preferred. For producing these particles, there can be employed, for example, a thermal-decomposition method in which anhydrous aluminum chloride is used as starting material and it is subjected to flame hydrolysis, and an aluminum alum thermal decomposition method in which aluminum hydroxide is used as staring material and it is reacted with sulfuric acid to form aluminum sulfate, this obtained aluminum sulfate is further reacted with ammonium sulfate to prepare aluminum alum, and the obtained aluminum alum is calcined. The size of the primary particles of aluminum oxide obtained by these methods is usually in the range of 5 to 40 nm, but since the particles often form agglomerates greater than such size, it is recommended to break up such agglomerates into the particles having the appropriate sizes. In this case, there may exist some secondary particles, but preferably such particles are those having an apparent average size of not more than 0.5 $\mu$m, more preferably 0.01 to 0.1 $\mu$m.

In preparation of the polyester used as base material of the film according to the present invention, the additive particles are preferably added in the course of the polyester synthesis reaction. It is especially preferable to add the said particles after the ester-exchange reaction or esterification reaction and before start of the polycondensation reaction. The additive particles are usually added in the form of a slurry of ethylene glycol, but if necessary, the particles may be subjected to such treatments as break-up, dispersion, classification, filtration, etc., before they are added. The particle concentration of the slurry of ethylene glycol to be added is usually 3 to 50 wt%, preferably 10 to 40 wt%. When the particle concentration of the slurry is less than 3 wt%, the amount of ethylene glycol used increase, correspondingly augmenting the base units of ethylene glycol. On the other hand, when a slurry with a particle concentration exceeding 50 wt% is added, the dispersibility of the particles tends to deteriorate. As the polycondensation reaction catalyst in the synthesis of polyester, there can be used the commonly employed catalysts such as Sb, Ti, Ge, Sn and Si compounds.

In the present invention, it is preferable that the number of the coarse protuberances of not less than 0.81 $\mu$m in height is not more than 30, more preferably not more than 25, even more preferably not more than 20 per 100 cm$^2$ of film surface. In case the number of such coarse protuberances exceeds 40 per 100 cm$^2$, the film can hardly be usable for making a high-quality magnetic recording media because of too many maximum dropout count.

The surface roughness (Ra) of the film according to the present invention is usually 0.005 to 0.1 $\mu$m, preferably 0.007 to 0.08 $\mu$m, more preferably 0.01 to 0.03 $\mu$m. Further, the ratio (Rt/Ra) of the maximum height of protuberance (Rt) in the film surface to Ra of the film of the present invention is preferably not more than 15, more preferably not more than 12, even more preferably 5 to 10. When the Rt/Ra exceeds 15, the running property or abrasion resistance of the film tends to deteriorate. Therefore, the magnetic recording medium, especially magnetic tape, made by using such a film, is subject to increase of dropout count or deterioration of electromagnetic conversion property.

The fact is to be noted that the maximum dropout count per minute of the magnetic tapes made by using the biaxially oriented polyester film of the present invention as base film is not more than 13, preferably not more than 12, and as seen from this fact, the biaxially oriented polyester film according to the present invention can be advantageously used as base film for magnetic recording media.

The film of the present invention may be either a single-layer film or a laminate film having two or more layers as far as the essentials of the invention are satisfied.

The film of the present invention is its most useful application to base film for video or audio tapes. It can also be applied to other uses such as preparation of dielectrics for capacitors, packaging, plate making, etc.

The film of the present invention has a minute-uniform surface structure and is few in number of coarse protuberances in the surface, excellent particularly in abrasion resistance and running property and useful as industrial material such as base film for magnetic recording media, and thus its industrial value is high.

EXAMPLES

The present invention will hereinafter be described more particularly by showing examples thereof, which the examples, however are merely intended to be illustrative and not to be construed as limiting the scope of the invention.

The determination methods and definitions of the various properties and characteristics shown in the Examples are as described below. In the following Examples and Comparative Examples, all "parts" mean "part by weight" unless otherwise noted.

(1) Average particle diameter ($d_{50}$) and particle-size distribution ($d_{25}/d_{75}$)

The diameter ($d_{50}$)of the particles with an integrated volume (cumulative volume) of 50% in the equivalent sphericity distribution determined by a centrifugal precipitation type particle-size distribution meter (Model SA-CP3, mfd. by Shimadzu Corp.) was as average particle diameter. Also, the ratio ($d_{25}/d_{75}$) of the diameter ($d_{25}$) of the particles with a cumulative volume of 25% to the diameter ($d_{75}$) of the particles with a cumulative volume of 75%, as integrated from the large particle side, was shown as an index of the particle size distribution.

As for the average particle diameter of other particles than calcium carbonate particles, it was determined by a photographic method using an electron microscope and calculated as the diameter of an equivalent sphere basis.

(2) Specific surface area (S)

Determined by the BET method using liquid nitrogen and calculating from the amount of nitrogen gas adsorbed.

(3) Sphericity ratio

The major diameter and the minor diameter of the particles were measured by an electron microscope, and the average values were taken as major diameter and minor diameter of each particle. Sphericity ratio was calculated from major diameter/minor diameter.

(4) Intrinsic viscosity of film

1 g of polymer was dissolved in 100 ml of a phenol/tetrachloroethane (50/50 by weight) mixed solvent, and the intrinsic viscosity of the polymer was measured at 30°C.

(5) Refractive index of film

Refractive index in the thickness direction ($n\alpha$), refractive index in the transverse direction ($n_{TD}$) and refractive index in the machine direction ($n_{MD}$) of the film were measured by using an Abbe's refractometer (mfd. by Atago Optical Co., Ltd) using the sodium D-line.

(6) Young's modulus (tensile modulus)

By using a tensile tester INTESCO Model 2001 (mfd. by INTESCO CO., LTD.), a sample film of 300 mm in length and 20 mm in width was pulled at a strain speed of 10 %/min in a room controlled to 23°C and 50% RH. By using the initial straight line portion of the tensile stress-strain curve, Young's modulus (E) was calculated from the following expression:

$$E = \Delta \sigma / \Delta \epsilon$$

wherein E is Young's modulus ($kg/mm^2$), $\Delta \sigma$ is difference in stress based on the original average sectional area between two points on the straight line, and $\Delta \epsilon$ is difference in strain between the same two points.

(7) Average roughness of film surface and roughness uniformity

The center-line average roughness (Ra) and the maximum height (Rt) was determined by using a surface roughness tester (SE-3F) (mfd. by Kosaka Kenkyusho, Ltd.) according to the method shown in JIS B0601. The radius of the stylus used in the determination was 2.0 $\mu$m, the load applied was 30 mg, and the cut-off value was 0.08 mm. The smaller the value of Rt/Ra, the more uniform is the surface.

(8) Running property

Evaluated from the slip property of the film. The slip property of the film was determined in the following way. A film was contacted at a winding angle ($\theta$) of 135° around a fixed hard chrome-plated metal roll (6 mm in diameter). A load of 53 g ($T_2$) was applied to one end thereof, the film was caused to running at a speed of 1 m/min and the resisting force [$T_1$, (g)] at the other end was measured. The coefficient of friction ($\mu$d) during running was calculated from the following expression:

$\mu$d = 0.424 ln ($T_1$/53)

(9) Number of coarse protuberances

Aluminum was deposited on the film surface and examination was made according to a double beam interference method by using a Nicon optiphoto interference microscope. The measuring wavelength was 0.54 $\mu$m. The number of the protuberances (with height of not less than 0.81 $\mu$m) showing the interference fringes of not less than third orders was counted over the area of 100 cm$^2$, and the counted number was as the number of coarse protuberances.

(10) Abrasion property

A 10 mm wide film was contacted at a winding angle of 135° around a 6 mm-diameter fixed hard chrome-plated pin (SUS 420, finished to 0.2S), and the 200-meter film was let run along a total distance of 5,000 meters at a speed of 11.3 m/min with an initial tension of 300 g. The amount of white dust of abrasion deposited on the pin was visually examined, and evaluation was made according to the following criterion.
A:     No deposition of dust was observed.
B:     Slight deposition of dust was observed.
C:     A small amount (greater amount than Rank B) of dust deposited on the pin.
D:     Dust deposited heavily on the pin.

(11) Film winding property

Terescope of roll end, wrinkling and winding posture in the polyester film winding operation were judged synthetically.

(12) Magnetic tape properties

200 parts of fine magnetic powder, 30 parts of polyurethane resin, 10 parts of nitrocellulose, 10 parts of vinyl chloride-cellulose acetate copolymer, 5 parts of lecithin, 100 parts of cyclohexane, 100 parts of methyl isobutyl ketone and 300 parts of methyl ethyl ketone were mixed and dispersed for 48 hours in a ball mill, and then 5 parts of a polyisocyanate compound was added to prepare a magnetic coating composition. This coating composition was applied on a polyester film, said film being magnetically oriented before the coating composition was well dried and solidified, and then the coating was dried to form a magnetic layer in thickness.
The thus obtained film having the said magnetic coating layer was let run along a distance of 5,000 meters seven times repeatedly by using a 5-stage supercalender consisting of planished metal rolls and polyester composite resin rolls, under the conditions of roll temperature of 85°C, linear pressure of 250 kg/cm and running speed of 80 m/min. The amount of abrasion white dust deposited on the resin rolls was visually examined, and evaluation was made according to the following criterion.
O :     The rolls were substantially free of white dust.
△ :     White dust deposited slightly on the rolls.
X :     Deposition of white dust was conspicuous.

10

Then the calendered tape was slit into 1/2 inch width and the following magnetic tape properties were evaluated by running the tape at normal speed in a video deck Model kv-3700 (mfd. by Matsushita Electric Co., Ltd.)

(A) Electromagnetic conversion property (VTR head output)

The output of the VTR head at measuring frequency of 4 MHz was measured by a synchroscope, and evaluation was made in comparison with a reference tape according to the following criterion.

◎: Very superior to the standard tape.

○: Equal to the standard tape.

△: Inferior to the standard tape.

X: Notably inferior to the standard tape and unable to stand practical use.

(B) Maximal dropout count

By playing back a video tape which has recorded the signals of 4.4 MHz, the number of times of occurrence of dropout was counted for about 20 minutes by a dropout counter (mfd. by Ohkura Industries Co., Ltd.), and converted a number of dropout per minute. This counting was repeated 20 times and the greatest count was shown as the maximal dropout count.

(13) Scuff resistance (Scratch durable)

The base film surface of a magnetic tape slit to a 1/2 inch width was contacted with and caused to run with a 6 mm diameter hard chrome-plated metal pin (finished to 3S) at a film winding angle of 135° and a running speed of 3 m/sec under a tension of 50 g.

Then aluminum was vacuum deposited to a thickness of about 1,000 Å on the abrased surface of the tape, and the degree of scuffing was visually judged. Scuff resistance was evaluated according to the following.

1: Scuff is very heavy.

2: Scuff is heavy.

3: The degree of scuffing is intermediate between Rank 2 and Rank 4.

4: Scuff is slight.

5: No scuff is seen.

(14) Cutting property

A wide and coated magnetic tape was cut to a 1/2 inch width, and the state of the cut face of the magnetic tape was observed under an electron microscope. The sample was marked with ○ when it was free of libwise upturn, or swarf or dust at the cut face; the sample which caused libwise upturn, or generation of swarf or dust at the cut face was marked with X; and the sample rated intermediate between ○ and X was marked with △.

Example 1

100 parts of dimethyl terephthalate, 60 parts of ethylene glycol and 0.09 parts of magnesium acetate tetrahydrate were supplied into a reactor. The mixture in the reactor was heated to evaporate away methanol and carry out an ester exchange reaction. The mixture was heated to a temperature of 230°C, taking 4 hours from start of the reaction, to substantially complete the ester exchange reaction.

Then 0.50 parts of ellipsoidal particles (sphericity ratio = 1.50) of vaterite-type calcium carbonate having an average particle diameter ($d_{50}$) of 0.24 $\mu$m, a particle-size distribution ($d_{25}/d_{75}$) of 1.30, a BET specific surface area (S) of 17.9 $m^2$/g, and $d_{50} \times S = 4.3$, were added as an ethylene glycol slurry. Said particles had been subjected to a surface treatment with a high-molecular weight polycarboxylic acid.

After addition of the slurry, 0.03 parts of phosphoric acid and 0.04 parts of antimony trioxide were further added to conduct a polycondensation reaction for 4 hours, thereby obtaining polyethylene terephthalate having an intrinsic viscosity of 0.60. Microscopical observation of the inside of the product confirmed that the particles were dispersed uniformly.

The thus obtained polyester was dried and melt-extruded at a temperature of 290°C to form an amorphous sheet, and this sheet was stretched 3.5 times in the machine direction (longitudinal direction) at a temperature of 93°C, further stretched 3.5 times in the transverse direction at a temperature of 110°C, and then heat-set at a temperature of 220°C for 3 seconds to obtain a film having a thickness of 15 $\mu$m. The Young's modulus of the obtained film was 430 kg/mm$^2$ in the longitudinal direction and 440 kg/mm$^2$ in the transverse direction. The intrinsic viscosity of the film was 0.59.

A magnetic layer was formed on this film to make a magnetic tape and its properties were determined.

### Example 2

By using the same vaterite-type calcium carbonate particles as used in Example 1, a film was obtained in the same way as Example 1 except that the film was provided with a refractive index in the thickness direction of 1.490, and the properties of the obtained film were evaluated.

### Example 3

By using the same vaterite-type calcium carbonate particles as used in Example 1, a film was obtained in the same way as Example 1 except that the film was provided with a refractive index in the thickness direction of 0.007, and the properties of the obtained film were determined.

### Comparative Example 1

A polyethylene terephthalate film was obtained in the same procedure as Example 1 except that the ellipsoidal particles (sphericity ratio = 1.50) of vaterite-type calcium carbonate having an average particle diameter ($d_{50}$) of 0.24 $\mu$m, a particle-size distribution ($d_{25}/d_{75}$) of 1.29 and a BET specific surface area (S) of 57.5 m$^2$/g, $d_{50} \times S = 13.8$ were used in a content shown in Table 2, and the properties of the obtained film were evaluated.

### Comparative Example 2

A polyethylene terephthalate film was obtained in the same procedure as Example 1 except that the ellipsoidal particles ( sphericity ratio = 1.50 ) of vaterite-type calcium carbonate having an average particle diameter ($d_{50}$) of O.30 $\mu$m, a particle-size distribution ($d_{25}/d_{75}$) of 1.40, a BET specific surface area (S) of 46.3 m$^2$/g and $d_{50} \times S = 13.9$ were used in a content shown in Table 2, and the properties of the obtained film were evaluated.

### Comparative Example 3

A polyethylene terephthalate film was obtained in the same procedure as Example 1 except that lumpy calcite-type calcium carbonate having an average particle diameter ($d_{50}$) of 0.30 $\mu$m and a particle size distribution ($d_{25}/d_{75}$) of 1.72 was used in a content shown in Table 2, and the properties of the film were evaluated.

### Example 4

A film was obtained in the same procedure as Example 1 except that delta-type aluminum oxide having an average particle diameter of O.03 $\mu$m was blended in a content shown in Table 3 together with vaterite-type calcium carbonate used in Example 1, and the properties of the obtained film were evaluated. The intrinsic viscosity of this film was O.59.

### Example 5

A film was obtained in the same procedure as Example 1 except that delta-type aluminum oxide having an average particle diameter of 0.03 $\mu$m was blended together with the ellipsoidal particles (sphericity ratio = 1.60) of vaterite-type calcium carbonate having an average particle diameter ($d_{25}$) of 0.30 $\mu$m, a particle size distribution ($d_{25}/d_{75}$) of 1.35, a BET specific surface area (S) of 18.0 m$^2$/g and $d_{50} \times S = 5.4$, in the contents shown in Table 3, in place of the vaterite-type calcium carbonate particles used in Example 1, and the properties of the obtained film were evaluated. This film had an intrinsic viscosity of 0.59.

12

# EP 0 565 004 A2

Example 6

A film was obtained in the same procedure as Example 1 except that the substantially spherical particles (sphericity = 1.05) of vaterite-type calcium carbonate having an average particle diameter ($d_{25}$) of 0.29 $\mu$m, a particle size distribution ($d_{25}/d_{75}$) of 1.32, a BET specific surface area (S) of 17.7 m$^2$/g and $d_{50}$ x S = 3.5 were blended in a content shown in Table 3 in place of the vaterite-type calcium carbonate particles used in Example 1, and the properties of the obtained film were evaluated. This film had an intrinsic viscosity of 0.59.

Example 7

In the film production in Example 1, the sheet stretched in both machine and transverse directions was re-stretched 1.08 times in the machine direction at a temperature of 130°C to obtain a film of 9.8 $\mu$m in thickness which was strengthened in the longitudinal direction, and the properties of this film were evaluated.

Comparative Example 4

A film was obtained in the same way as Example 7 by using the particles used in Comparative Example 1, and the properties of the obtained film were evaluated.

Example 8

In the film production in Example 4, the sheet stretched in both machine and transverse directions was additionally stretched 1.09 times in the transverse direction at a temperature of 160°C to obtain a film of 9.8 $\mu$m in thickness which was strengthened in the transverse direction, and the properties of the obtained film were evaluated.

Example 9

In the polyester preparation of Example 1, an ester exchange reaction was carried out in the same way as Example 1 except for use of dimethyl-2,6-dimethyl naphthalate in place of dimethyl terephthalate.

Then, 0.5 parts of vaterite-type calcium carbonate used in Example 1 was added as an ethylene glycol slurry, after which 0.03 parts of phosphoric acid and 0.04 parts of antimony trioxide were further added to carry out a polycondensation reaction in the usual way to obtain polyethylene-2,6-naphthalate having an intrinsic viscosity of 0.59. This polymer was then subjected to solid-phase polymerization under the conditions of 0.3 mmHg and 235°C for 7 hours to obtain polyethylene-2,6-naphthalate having an intrinsic viscosity of 0.68.

This polymer was extruded into a sheet by an extruder at a temperature of 295°C and worked into an amorphous sheet of 100 $\mu$m in thickness by using the static charge cooling method. This sheet was stretched 4.2 times in the machine direction at a temperature of 140°C, further stretched 3.9 times in the transverse direction by a tenter and then heat-set at a temperature of 220°C for 5 seconds to obtain a polyethylene-2,6-naphthalate film having 8 $\mu$m in thickness, and the properties of the obtained film were evaluated.

Comparative Example 5

A film was obtained in the same way as Example 9 by using the particles employed in Comparative Example 1, and the properties of the obtained film were evaluated.

Example 10

A polyethylene-2,6-naphthalate film was obtained in the same way as Example 9 except that the longitudinal Young's modulus of the film was 1,020 kg/mm$^2$ and the properties of the film were evaluated.

Example 11

A polyethylene terephthalate film having 9.8 $\mu$m in thickness was obtained in the same procedure as Example 8 except that delta-type aluminum oxide having an average particle diameter of 0.03 $\mu$m was blended in an amount of 0.30 parts by weight together with two kinds of vaterite-type calcium carbonate described in Table 6 in place of the particles used in Example 8. The longitudinal Young's modulus of this film was 440 kg/mm$^2$ and its transverse Young's modulus was 680 kg/mm$^2$.

Example 12

A polyethylene-2,6-naphthalate film having 8 $\mu$m in thickness was obtained in the same procedure as Example 10 except that delta-type aluminum oxide having an average particle diameter of 0.03 $\mu$m was blended in an amount of 0.30 parts by weight together with two kinds of vaterite-type calcium carbonate described in Table 6 in place of the particles used in Example 10. The longitudinal Young's modulus of this film was 1,030 kg/mm$^2$ and its transverse Young's modulus was 730 kg/mm$^2$.

Comparative Examples 6-8

Polyester films were obtained in the same way as Examples 1 except for use of the particles specified in Table 7.

Comparative Example 9

Polyester films were obtained in the same way as Examples 1 except for use of the particles specified in Table 8.

The results obtained in the above Examples and Comparative Examples are shown collectively in Tables 1-8.

Table 1

| | Example 1 | Example 2 | Example 3 |
|---|---|---|---|
| Kind of particles | Vaterite calcium carbonate | Vaterite calcium carbonate | Vaterite calcium carbonate |
| Particle size distribution ($d_{25}/d_{75}$) | 1.30 | 1.30 | 1.30 |
| Average diameter ($d_{50}$) ($\mu$m) | 0.24 | 0.24 | 0.24 |
| Specific surface area (S) ($m^2/g$) | 17.9 | 17.9 | 17.9 |
| $d_{50}$ x S | 4.3 | 4.3 | 4.3 |
| Sphericity ratio | 1.50 | 1.50 | 1.50 |
| Content (wt%) | 0.50 | 0.50 | 0.50 |
| n$\alpha$ | 1.497 | 1.490 | 1.497 |
| $\Delta$n | 0.037 | 0.038 | 0.037 |
| Ra ($\mu$m) | 0.012 | 0.011 | 0.011 |
| Rt/Ra | 8 | 8 | 8 |
| Number of coarse protuberances (per 100 $cm^2$) | 7 | 7 | 8 |
| Abrasion resistance | A | A-B | A |
| Calender fouling | ◯ | ◯ | ◯ |
| Cutting property | ◯ | ◯ | ◯-△ |
| Electromagnetic conversion property | ◎-◯ | ◯ | ◯-△ |
| Maximum dropout count (per minute) | 7.1 | 11.5 | 11.6 |
| Scuff resistance | 3 | 3 | 3 |

Table 2

| | Comp. Example 1 | Comp. Example 2 | Comp. Example 3 |
|---|---|---|---|
| Kind of particles | Vaterite calcium carbonate | Vaterite calcium carbonate | Calcite calcium carbonate |
| Particle size distribution ($d_{25}/d_{75}$) | 1.29 | 1.40 | 1.72 |
| Average particle diameter ($d_{50}$) ($\mu$m) | 0.24 | 0.30 | 0.25 |
| Specific surface area (S) ($m^2/g$) | 57.5 | 46.3 | 15.2 |
| $d_{50}$ x S | 13.8 | 13.9 | 3.8 |
| Sphericity ratio | 1.50 | 1.50 | Lumpy |
| Content (wt%) | 0.50 | 0.50 | 0.50 |
| $n\alpha$ | 1.497 | 1.490 | 1.497 |
| $\Delta n$ | 0.037 | 0.030 | 0.036 |
| Ra ($\mu$m) | 0.012 | 0.010 | 0.012 |
| Rt/Ra | 8 | 9 | 16 |
| Number of coarse protuberances (per 100 $cm^2$) | 37 | 38 | 50 |
| Abrasion resistance | A | A | A-B |
| Calender fouling | ○ | ○ | ○-△ |
| Cutting property | ○ | ○ | ○ |
| Electromagnetic conversion property | ○ | ○ | △ |
| Maximum dropout count (per minute) | 14.5 | 15.0 | 15.6 |
| Scuff resistance | 3 | 3 | 2 |

Table 3

| | Example 4 | Example 5 | Example 6 |
|---|---|---|---|
| First particles<br>Kind of particles | Vaterite calcium carbonate | Vaterite calcium carbonate | Vaterite calcium carbonate |
| Particle size distribution ($d_{25}/d_{75}$) | 1.30 | 1.35 | 1.32 |
| Average particle diameter ($d_{50}$) ($\mu$m) | 0.24 | 0.30 | 0.41 |
| Specific surface area (S) ($m^2$/g) | 17.9 | 18.0 | 17.7 |
| $d_{50}$ x S | 4.3 | 5.4 | 3.5 |
| Sphericity ratio | 1.50 | 1.60 | 1.05 |
| Content (wt%) | 0.50 | 0.50 | 0.30 |
| Second particles<br>Kind of particles | $Al_2O_3$ | $Al_2O_3$ | – |
| Average particle diameter ($\mu$m) | 0.03 | 0.03 | – |
| Content (wt%) | 0.40 | 0.40 | – |
| n$\alpha$ | 1.497 | 1.496 | 1.497 |
| $\Delta$n | 0.038 | 0.037 | 0.037 |
| Ra ($\mu$m) | 0.012 | 0.012 | 0.014 |
| Rt/Ra | 8 | 9 | 13 |
| Number of coarse protuberances (per 100 $cm^2$) | 9 | 12 | 16 |
| Abrasion resistance | A | A | A–B |
| Calender fouling | ◯ | ◯ | ◯ |
| Cutting property | ◯ | ◯ | ◯ |
| Electromagnetic conversion property | ◎ | ◎ | ◯ |
| Maximum dropout count (per minute) | 3.0 | 3.2 | 10.5 |
| Scuff resistance | 5 | 5 | 3 |

Table 4

| | Example 7 | Comp. Example 4 | Example 8 |
|---|---|---|---|
| First particles Kind of particles | Vaterite calcium carbonate | Vaterite calcium carbonate | Vaterite calcium carbonate |
| Particle size distribution $(d_{25}/d_{75})$ | 1.30 | 1.29 | 1.30 |
| Average particle diameter $(d_{50})$ $(\mu m)$ | 0.24 | 0.24 | 0.24 |
| Specific surface area $(S)$ $(m^2/g)$ | 17.9 | 57.5 | 17.9 |
| $d_{50}$ x S | 4.3 | 13.8 | 4.3 |
| Sphericity ratio | 1.50 | 1.50 | 1.50 |
| Content (wt%) | 0.50 | 0.50 | 0.40 |
| Second particles Kind of particles | – | – | $Al_2O_3$ |
| Average particle diameter $(\mu m)$ | – | – | 0.03 |
| Content (wt%) | – | – | 0.40 |
| Ra $(\mu m)$ | 0.011 | 0.011 | 0.010 |
| Rt/Ra | 8 | 8 | 8 |
| Young's modulus $(kg/mm^2)$ Longitudinal | 690 | 690 | 440 |
| Transverse | 430 | 440 | 680 |
| Slip property | 0.29 | 0.28 | 0.30 |
| Number of coarse protuberances (per 100 $cm^2$) | 6 | 37 | 8 |
| Abrasion resistance | A | A | A |
| Calender fouling | ◯ | ◯ | ◯ |
| Electromagnetic conversion property | ◎-◯ | ◯ | ◎ |
| Maximum dropout count (per minute) | 8.0 | 14.7 | 2.7 |
| Scuff resistance | 3 | 3 | 5 |

18

Table 5

| | Example 9 | Comp. Example 5 | Example 10 |
|---|---|---|---|
| First particles Kind of particles | Vaterite calcium carbonate | Vaterite calcium carbonate | Vaterite calcium carbonate |
| Particle size distribution ($d_{25}/d_{75}$) | 1.38 | 1.29 | 1.38 |
| Average particle diameter ($d_{50}$) ($\mu$m) | 0.24 | 0.24 | 0.24 |
| Specific surface area (S) ($m^2/g$) | 17.9 | 57.5 | 17.9 |
| $d_{50}$ x S | 4.3 | 13.8 | 4.3 |
| Sphericity ratio | 1.50 | 1.50 | 1.50 |
| Content (wt%) | 0.50 | 0.50 | 0.40 |
| Kind of particles | - | - | $Al_2O_3$ |
| Average particle diameter ($\mu$m) | - | - | 0.03 |
| Content (wt%) | - | - | 0.40 |
| Ra ($\mu$m) | 0.011 | 0.011 | 0.010 |
| Rt/Ra | 8 | 8 | 8 |
| Young's modulus ($kg/mm^2$) Longitudinal | 740 | 730 | 1020 |
| Transverse | 730 | 730 | 730 |
| Slip property | 0.29 | 0.28 | 0.30 |
| Number of coarse protuberances (per 100 $cm^2$) | 7 | 39 | 8 |
| Abrasion resistance | A | A | A |
| Calender fouling | ○ | ○ | ○ |
| Electromagnetic conversion property | ◎-○ | ○ | ◎ |
| Maximum dropout count (per minute) | 8.7 | 14.9 | 2.9 |
| Scuff resistance | 3 | 3 | 5 |

Table 6

| | Example 11 | Example 12 |
|---|---|---|
| First particles<br>Kind of particles | Vaterite calcium carbonate | Vaterite calcium carbonate |
| Particle size distribution ($d_{25}/d_{75}$)<br>Average diameter $d_{25}$ ($\mu$m)<br>Specific surface area S (m$^2$/g)<br>$d_{50}$ x S<br>Sphericity ratio<br>Content (wt%) | 1.30<br>0.24<br>17.9<br>4.3<br>1.50<br>0.30 | 1.30<br>0.24<br>17.9<br>4.3<br>1.50<br>0.30 |
| Second particles<br>Kind of particles | Vaterite calcium carbonate | Vaterite calcium carbonate |
| Particle size distribution ($d_{25}/d_{75}$)<br>Average diameter ($d_{50}$) ($\mu$m)<br>Specific surface area (S) (m$^2$/g)<br>$d_{50}$ x S<br>Sphericity ratio<br>Content (wt%) | 1.40<br>0.50<br>9.6<br>4.8<br>1.50<br>0.05 | 1.40<br>0.50<br>9.6<br>4.8<br>1.50<br>0.05 |
| Ra ($\mu$m)<br>Rt ($\mu$m)<br>Number of coarse protuberances (per 100 cm$^2$)<br>Abrasion resistance<br>Winding characteristics<br>Calender fouling<br>S/N (dB)<br>Maximum dropout count (per minute)<br>Scuff resistance | 0.011<br>0.088<br>9<br>A<br>Good<br>○<br>◎<br>7.2<br>5 | 0.011<br>0.089<br>10<br>A<br>Good<br>○<br>◎<br>7.1<br>5 |

# EP 0 565 004 A2

Table 7

| | | Comp. Example 6 | Comp. Example 7 | Comp. Example 8 |
|---|---|---|---|---|
| | Kind of particles | Calcite calcium carbonate | Calcite calcium carbonate | Calcite calcium carbonate |
| | Particle size distribution $(d_{25}/d_{75})$ | 1.72 | 1.72 | 1.27 |
| | Average diameter $d_{50}$ ($\mu$m) | 0.30 | 0.73 | 0.75 |
| | Specific surface area (S) (m$^2$/g) | 8 | 6 | 108 |
| | $d_{50}$ x S | 2.4 | 4.4 | 81 |
| | Sphericity ratio | Lumpy | Lumpy | 1.52 |
| | Content (wt%) | 0.50 | 0.16 | 0.16 |
| | n$\alpha$ | 1.497 | 1.497 | 1.497 |
| | $\Delta$n | 0.037 | 0.037 | 0.037 |
| | Ra ($\mu$m) | 0.013 | 0.015 | 0.019 |
| | Rt/Ra | 17 | 17 | 14 |
| | Number of coarse protuberances (per 100 cm$^2$) | 55 | 56 | 48 |
| | Abrasion resistance | A-B | B | B |
| | Calender fouling | ○-△ | △ | △ |
| | Cutting property | ○ | ○ | ○ |
| | Electromagnetic conversion property | △ | △ | △ |
| | Maximum dropout count (per minute) | 16.1 | 17.2 | 1.58 |
| | Scuff resistance | 2 | 2 | 2 |

21

Table 8

| | Comparative Example 9 |
|---|---|
| First particles<br>Kind of particles | Vaterite calcium carbonate |
| Particle size distribution ($d_{25}/d_{75}$)<br>Average diameter ($d_{50}$) ($\mu$m)<br>Specific surface area (S) ($m^2$/g)<br>$d_{50}$ x S<br>Sphericity<br>Content (wt%) | 1.29<br>0.25<br>54.8<br>13.7<br>1.50<br>0.4 |
| Kind of particles<br>Average diameter ($\mu$m)<br>Content (wt%) | $Al_2O_3$<br>0.03<br>0.4 |
| Ra ($\mu$m)<br>Rt/Ra<br>Young's modulus (kg/mm$^2$) Longitudinal<br>Transverse<br>Slip property<br>Number of coarse protuberances (per 100 cm$^2$)<br>Abrasion resistance<br>Calender fouling<br>Electromagnetic conversion property<br>Maximum dropout count (per minute)<br>Scuff resistance | 0.010<br>8<br>440<br>680<br>0.28<br>36<br>A<br>○<br>○<br>14.9<br>4 |

As appreciated from the above Examples and Comparative Examples, only when vaterite-type calcium carbonate having an average particle diameter ($d_{50}$) of 0.07 to 1.50 $\mu$m, a particle size distribution ($d_{25}/d_{75}$) of not more than 2.00, a BET specific surface area (S) of not less than 1.6 $m^2$/g to less than 30 $m^2$/g and a product of average particle diameter and specific surface area ($d_{50}$ x S) of 2.4 to 7.0 is blended in a polyester in a ratio in the range of 0.005 to 2.0% by weight, there can be obtained a biaxially oriented polyester film intended to provide in the present invention, that is, the one in which the number of coarse protuberances of not less than 0.81 $\mu$m in height per 100 cm$^2$ of film surface is not more than 30, and which has a minute-uniform surface structure and is also provided with excellent running property and abrasion resistance.

Further, only when the said biaxially oriented polyester film, that is, the one obtained by blending the vaterite-type calcium carbonate particles satisfying all of the said requirements, is used as base film, there can be obtained a magnetic tape whose maximum dropout count per minute is less than 13 and which has excellent electromagnetic conversion property and abrasion resistance.

The films satisfying the structural and compositional requirements specified in the present invention are uniform in surface, few in number of coarse protuberances and excellent in abrasion resistance. Especially, the films additionally blended with the fine aluminum oxide particles are also excellent in scuff resistance and quite suited for use as base film for magnetic recording media.

**Claims**

1. A biaxially oriented polyester film containing 0.005 to 2.0% by weight of vaterite-type calcium carbonate satisfying all of the following formulae (1)-(4):

$d_{25}/d_{75} \leqq 2.00$    (1)

$0.07 \leqq d_{50} \leqq 1.50$    (2)

$1.6 \leqq S < 30.0$    (3)

$$2.4 \leqq d_{50} \times S \leqq 7.0 \qquad (4)$$

wherein $d_{25}$, $d_{75}$ and $d_{50}$ represent the diameters ($\mu$m) of the particles when the cumulative volumes are 25%, 75% and 50% of the total volume of the particles, respectively, and S represents specific surface area (m$^2$/g) measured by the BET method.

2. A biaxially oriented polyester film according to Claim 1, wherein the BET specific surface area (S) of the vaterite-type calcium carbonate particles is 2.0 to 25 m$^2$/g.

3. A biaxially oriented polyester film according to Claim 1, wherein the product of the BET specific surface area (S) and the average particle diameter ($d_{50}$) of the vaterite-type calcium carbonate particles is 3.0 to 6.0.

4. A biaxially oriented polyester film according to Claim 1, wherein the vaterite-type calcium carbonate particles are the ellipsoidal particles having a sphericity ratio (major diameter/minor diameter) of 1.2 to 1.8.

5. A biaxially oriented polyester film according to Claim 1, particles used jointly with said vaterite-type calcium carbonate particles are deposited particles which are deposited in the reaction system in the course of the polyester preparation process, inorganic additive particles, fine-powders of polymers, or a mixture thereof.

6. A biaxially oriented polyester film according to Claim 5, wherein the content of the jointly used particles is not more than 0.5 times by weight that of the vaterite-type calcium carbonate particles in case the average particle diameter of said jointly used particles is more than that of said vaterite-type calcium carbonate particles.

7. A biaxially oriented polyester film according to Claim 5, wherein the content of the jointly used particles is 1 to 20 times by weight that of the vaterite-type calcium carbonate particles in case the average particle diameter of said jointly used particles is smaller than that of said vaterite-type calcium carbonate particles.

8. A biaxially oriented polyester film according to Claim 1, as the first particles, the vaterite-type calcium carbonate particles having an average particle diameter of 0.07 to 0.8 $\mu$m are jointly used with, as the second particles, the vaterite-type calcium carbonate particles whose average particle diameter is 1.5 to 5.0 times that of the first particles and which has an average particle diameter of not more than 1.5 $\mu$m.

9. A biaxially oriented polyester film according to Claim 8, wherein the content of the vaterite-type calcium carbonate particles used as the first particles is 0.2 to 1.0% by weight, and the content of the vaterite-type calcium carbonate particles used as the second particles is 0.005 to 0.25% by weight.

10. A biaxially oriented polyester film according to Claim 5, wherein the inorganic additive particles are the aluminum oxide particles having an average particle diameter of not more than 0.5 $\mu$m.

11. A biaxially oriented polyester film according to Claim 10, wherein the content of aluminum oxide is 0.5 to 1.7 % by weight based on the vaterite-type calcium carbonate particles.

12. A biaxially oriented polyester film according to Claim 1, having a surface roughness (Ra) of 0.005 to 0.1 $\mu$m, and the ratio (Rt/Ra) of the maximum protuberance height (Rt) in the surface to the surface roughness (Ra) of not more than 15.

13. A biaxially oriented polyester film according to Claim 1, wherein the number of coarse protuberances of not less than 0.81 $\mu$m per 100 cm$^2$ of film surface is not more than 30.